# EUROPEAN PATENT APPLICATION

(11) **EP 4 092 817 A1**
(43) Date of publication of application: **23.11.2022**
(21) Application number: 21784115.4
(22) Date of filing: 17.03.2021
(51) Int. Cl.: H01M 50/183, H01M 50/172, H01M 50/543, H01M 50/531, H01M 50/572, H01M 50/116, H01M 50/557

(54) **ELECTRODE LEAD, METHOD FOR PRODUCING SAME, AND POUCH-TYPE SECONDARY BATTERY**

(30) Priority: 07.04.2020 KR 20200042421
(71) Applicant: LG Energy Solution, Ltd., Seoul 07335 (KR)
(72) Inventor: KIM, Sang Hun, Daejeon 34122 (KR); KIM, Hyun Tae, Cheongju-si, Chungcheongbuk-do 28317 (KR); CHOI, Yong Su, Daejeon 34122 (KR); YU, Hyung Kyun, Daejeon 34122 (KR); KANG, Min Hyeong, Daejeon 34122 (KR); BYEN, Il Gyu, Cheongju-si, Chungcheongbuk-do 28114 (KR); JEONG, Seong Heon, Cheongju-si, Chungcheongbuk-do 28109 (KR); CHO, Chung Ki, Cheongju-si, Chungcheongbuk-do 28118 (KR)
(74) Representative: Plasseraud IP
(86) International application number: PCT/KR2021/003306
(87) International publication number: WO 2021/206306

(57) **Abstract**

An electrode lead according to an embodiment of the present invention for achieving the above object includes: a first electrode lead having one end connected to an electrode tab protruding from one side of an electrode assembly; a second electrode lead having one end connected to the other end of the first electrode lead and the other end protruding to the outside of a battery case accommodating the electrode assembly; and a connection part configured to connect the first electrode lead to the second electrode lead, wherein the connection part is formed by curing an adhesive applied between the first electrode lead and the second electrode lead, the adhesive is formed by mixing a conductor and a solvent, the solvent is formed by mixing a polymer and a diluent, and the solvent contains 5 wt% to 15 wt% of the diluent.

## Description

### CROSS-REFERENCE TO RELATED APPLICATION

The present application claims the benefit of the priority of Korean Patent Application 10-2020-0042421, filed on April 07, 2020, which is hereby incorporated by reference in its entirety.

### TECHNICAL FIELD

The present invention relates to an electrode lead, a method for manufacturing the same, and a pouch type secondary battery, and more particularly, to an electrode lead, which is formed in two stages to discharge a gas generated in a battery case to the outside, thereby securing safety, and in which the two-stage electrode leads are reliably detached to completely cut off electrical connection, a method for manufacturing the same, and a pouch type secondary battery.

### BACKGROUND ART

In general, secondary batteries include nickelcadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture an electrode assembly, a cathode (hereinafter, referred to as a positive electrode), a separator, and an anode (hereinafter, referred to as a negative electrode) are manufactured and stacked. Specifically, positive electrode active material slurry is applied to a positive electrode collector, and negative electrode active material slurry is applied to a negative electrode collector to manufacture a positive electrode and a negative electrode. Also, when the separator is interposed and stacked between the manufactured positive electrode and the manufactured negative electrode, unit cells are formed. The unit cells are stacked on each other to form an electrode assembly. Also, when the electrode assembly is accommodated in a specific case, and an electrolyte is injected, the secondary battery is manufactured.

Such a secondary battery is classified into a pouch type secondary battery and a can type secondary battery according to a material of a battery case accommodating an electrode assembly. In the pouch type secondary battery, the electrode assembly is accommodated in a pouch made of a flexible polymer material having a variable shape. Also, in the can type secondary battery, an electrode assembly is accommodated in a case made of a metal or plastic material having a predetermined shape.

The pouch type battery case is manufactured by performing drawing molding on a pouch film having flexibility to form a cup part. In addition, when the cup part is formed, an electrode assembly is accommodated in an accommodation space of the cup part, and then, the battery case is folded to seal a sealing part, thereby manufacturing a secondary battery.

In the secondary battery, a gas in the secondary battery may be generated by internal short-circuit, overcharging, overdischarging, or the like. Here, the gas may allow the secondary battery to increase in internal pressure to cause problems such as weakening of bonding force between components, damage of a case of the secondary battery, an early operation of a protection circuit, deformation of an electrode, internal short-circuit, explosion, and the like. Thus, in the case of the can type secondary battery, a protection member such as a CID filter and a safety vent is provided to physically interrupt an electrical connection when an internal pressure of a case increases. However, in the case of the pouch type secondary battery according to the related art, the protection member is not sufficiently provided.

(Patent Document 1)

Korean Patent Publication No. 2019-0059677

### DISCLOSURE OF THE INVENTION

### TECHNICAL PROBLEM

An object of the present invention is to provide an electrode lead, which is formed in two stages to discharge a gas generated in a battery case to the outside, thereby securing safety, and in which the two-stage electrode leads are reliably detached to completely cut off electrical connection, a method for manufacturing the same, and a pouch type secondary battery.

The objects of the present invention are not limited to the aforementioned object, but other objects not described herein will be clearly understood by those skilled in the art from descriptions below.

### TECHNICAL SOLUTION

An electrode lead according to an embodiment of the present invention for achieving the above object includes: a first electrode lead having one end connected to an electrode tab protruding from one side of an electrode assembly; a second electrode lead having one end connected to the other end of the first electrode lead and the other end protruding to the outside of a battery case accommodating the electrode assembly; and a connection part configured to connect the first electrode lead to the second electrode lead, wherein the connection part is formed by curing an adhesive applied between the first electrode lead and the second electrode lead, the adhesive is formed by mixing a conductor and a solvent, the solvent is formed by mixing a polymer and a diluent, and the solvent contains 5 wt% to 15 wt% of the diluent.

Also, the solvent may contain 5 wt% to 10 wt% of the diluent.

Also, the diluent may include a glycidyl ester-based material.

Also, the adhesive may contain 70 wt% to 85 wt% of the conductor and 15 wt% to 30 wt% of the solvent.

Also, the conductor may include at least one of graphite, carbon black, conductive fiber, metal powder, conductive whisker, conductive metal oxide, or conductive material.

Also, the conductor may include silver.

Also, the polymer may include at least one of an acrylic resin, an epoxy resin, an ethylene propylene diene monomer (EPDM) resin, a chlorinated polyethylene (CPE) resin, silicone, polyurethane, a urea resin, a melamine resin, a phenol resin, an unsaturated ester resin, polypropylene (PP), polyethylene (PE), polyimide, or polyamide.

Also, the polymer may include an epoxy resin.

A pouch type secondary battery according to an embodiment of the present invention for achieving the above object includes: an electrode assembly in which electrodes including a positive electrode and a negative electrode and separators are stacked; a pouch-shaped battery case configured to accommodate the electrode assembly; an electrode tab connected to the electrodes and protruding from one side of the electrode assembly; a first electrode lead having one end connected to the electrode tab; a second electrode lead having one end connected to the other end of the first electrode lead and the other end protruding to the outside of the battery case; and a connection part configured to connect the first electrode lead to the second electrode lead, wherein the connection part is formed by curing an adhesive applied between the first electrode lead and the second electrode lead, the adhesive is formed by mixing a conductive material and a solvent, the solvent is formed by mixing a polymer and a diluent, and the solvent contains 5 wt% to 15 wt% of the diluent.

Also, the pouch type secondary battery may further include an insulation part configured to surround a portion at which the first and second electrode leads are connected to each other through the connection part and configured to bond the first and second electrode leads to the battery case.

Also, bonding force between each of the first and second electrode leads and the connection part may be less than that between each of the first and second electrode leads and the insulation part.

Also, the insulation part may be made of at least one of a thermoplastic resin, a thermosetting resin, or a photocurable resin, which has electrical insulation.

A method for manufacturing an electrode lead according to an embodiment of the present invention for achieving the above object includes: a step of manufacturing each of a first electrode lead and a second electrode; a step of applying an adhesive to at least one of the other end of the first electrode lead or one end of the second electrode lead; a step of bonding the other end of the first electrode lead to the one end of the second electrode lead to form a lead stack; and a step of applying heat to the lead stack to cure the adhesive, thereby forming a connection part 15, wherein the adhesive is formed by mixing a conductive material and a solvent, the solvent is formed by mixing a polymer and a diluent, and the solvent contains 5 wt% to 15 wt% of the diluent.

Particularities of other embodiments are included in the detailed description and drawings.

### ADVANTAGEOUS EFFECTS

According to the embodiments of the present invention, there are at least the following effects.

Since the two-stage electrode leads are provided, even if the gas is generated in the battery case to increase in internal pressure, the gas may be discharged to the outside to secure the safety.

In addition, since the two-stage electrode leads are reliably detached, the electrical connection may be completely cut off.

In addition, while improving the electrolyte resistance of the adhesive bonding the two-stage electrode leads to each other, the contact resistance may not significantly increase.

The effects of the prevent invention are not limited by the aforementioned description, and thus, more varied effects are involved in this specification.

### BRIEF DESCRIPTION OF THE DRAWINGS

FIG. 1 is an assembly view of a secondary battery according to an embodiment of the present invention.
FIG. 2 is a perspective view of the secondary battery according to an embodiment of the present invention.
FIG. 3 is a perspective view illustrating a state in which the pouch type secondary battery is expanded in volume according to an embodiment of the present invention.
FIG. 4 is a flowchart illustrating a method for manufacturing an electrode lead according to an embodiment of the present invention.
FIG. 5 is a partial cross-sectional view taken along line A-A' of FIG. 2 in the pouch type secondary battery according to an embodiment of the present invention.
FIG. 6 is a partial cross-sectional view taken along line A-A' of FIG. 2 in a state in which the pouch type secondary battery is expanded in volume according to an embodiment of the present invention.
FIG. 7 is a graph illustrating a weight reduction rate of each of electrode lead samples according to Manufacturing Example 1 and Comparative Example 1 of the present invention.

### MODE FOR CARRYING OUT THE INVENTION

Advantages and features of the present invention, and implementation methods thereof will be clarified through following embodiments described with reference to the accompanying drawings. The present invention may, however be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (comprising technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present invention. In this specification, the terms of a singular form may include plural forms unless specifically mentioned. The meaning of "comprises" and/or "comprising" does not exclude other components besides a mentioned component.

Hereinafter, preferred embodiments will be described in detail with reference to the accompanying drawings.

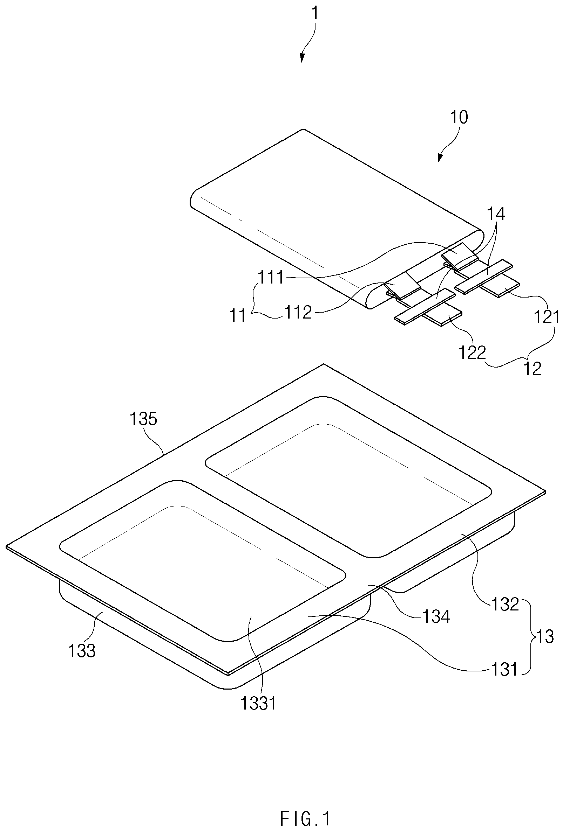

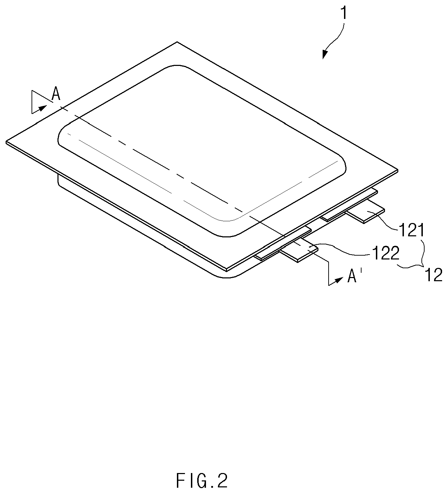

FIG. 1 is an assembly view of a secondary battery 1 according to an embodiment of the present invention, and FIG. 2 is a perspective view of the secondary battery 1 according to an embodiment of the present invention.

As illustrated in FIG. 1, the pouch type secondary battery 1 according to an embodiment of the present invention includes an electrode assembly 10, in which electrodes such as a positive electrode and a negative electrode and separators are stacked, and a pouch type battery case 13 accommodating the electrode assembly 10 therein.

To manufacture the pouch type secondary battery 1, first, slurry in which an electrode active material, a binder, and a plasticizer are mixed with each other is applied to a positive electrode collector and a negative electrode collector to manufacture electrodes such as a positive electrode and a negative electrode. The electrodes are stacked on both sides of a separator to manufacture the electrode assembly 10 having a predetermined shape. Then, the electrode assembly 10 is inserted into the battery case 13, and the battery case 13 is sealed after injecting an electrolyte therein.

Particularly, the electrode assembly 10 may be a stacked structure including two types of electrodes such as a positive electrode and a negative electrode and a separator disposed between the electrodes to insulate the electrodes from each other or disposed at a left or right side of one electrode. The stacked structure may have various shapes without being limited in shape. For example, the cathode and the anode, each of which has a predetermined standard, may be stacked with the separator therebetween, or the stacked structure may be wound in the form of a jelly roll. Each of the two types of electrodes, i.e., the positive electrode and the negative electrode has a structure in which active material slurry is applied to the electrode collector having a metal foil or metal mesh shape. The slurry may be usually formed by agitating a granular active material, an auxiliary conductor, a binder, and a plasticizer with a solvent added. The solvent may be removed in the subsequent process.

As illustrated in FIG. 1, the electrode assembly 10 includes electrode tabs 11. The electrode tabs 11 are respectively connected to a positive electrode and a negative electrode of the electrode assembly 10 to protrude to the outside of the electrode assembly 10, thereby providing a path, through which electrons are moved, between the inside and outside of the electrode assembly 10. An electrode collector of the electrode assembly 10 is constituted by a portion coated with an electrode active material and a distal end, on which the electrode active material is not applied, i.e., a non-coating portion. Also, each of an electrode tabs 11 may be formed by cutting the non-coating portion or by connecting a separate conductive member to the non-coating portion through ultrasonic welding. As illustrated in FIG. 1, the electrode tabs 11 may protrude from one side of the electrode assembly 10 in the same direction, but the present invention is not limited thereto. For example, the electrode tabs 11 may protrude in directions different from each other.

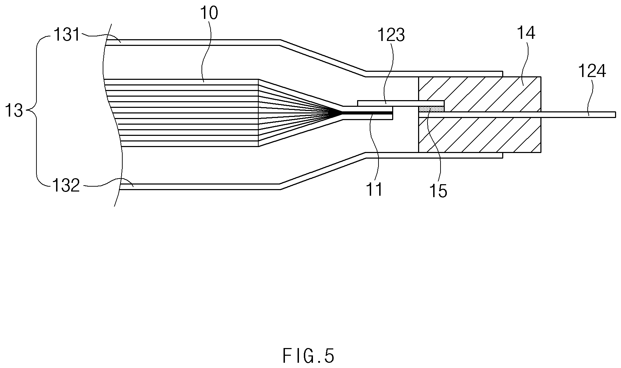

In the electrode assembly 10, the electrode lead 12 that supplies electricity to the outside of the secondary battery 1 is connected to the electrode tab 11 through spot welding. The electrode lead 12 according to an embodiment of the present invention is provided in plurality to form two-stage electrode leads 12. Also, in the two-stage electrode leads 12, a first electrode lead 123 (see FIG. 5) is connected to the electrode tab 11 of the electrode assembly 10, and a second electrode lead 124 (see FIG. 5) protrudes to the outside of a battery case 13. A detailed description of the two-stage electrode leads 12 will be described later.

A portion of the electrode lead 12 is surrounded by an insulation part 14. The insulation part 14 may be disposed to be limited within a sealing part 134, at which an upper case 131 and a lower case 132 of the battery case 13 are thermally fused, so that the electrode lead 12 is bonded to the battery case 13. Also, electricity generated from the electrode assembly 10 may be prevented from flowing to the battery case 13 through the electrode lead 12, and the sealing of the battery case 13 may be maintained. Thus, the insulation part 14 may be a non-conductor having high adhesiveness and non-conductivity by which electricity is not conducted well. Particularly, the insulation part 14 may include at least one of a thermoplastic resin, a thermosetting resin, or a photocurable resin, which has electrical insulation, as a polymer resin. In general, although an insulation tape which is easily attached to the electrode lead 12 and has a relatively thin thickness is mainly used as the insulation part 14, the present invention is not limited thereto. For example, various members may be used as the insulation part 14 as long as the members are capable of insulating the electrode lead 12.

The electrode leads 12 include a positive electrode lead 121 having one end connected to a positive electrode tab 111 to extend in a direction in which the positive electrode tab 111 protrudes and a negative electrode lead 122 having one end connected to a negative electrode tab 112 to extend in a direction in which the negative electrode tab 112 protrudes. On the other hand, as illustrated in FIG 1, all of the other ends of the positive electrode lead 121 and the negative electrode lead 122 protrude to the outside of the battery case 13. As a result, electricity generated in the electrode assembly 10 may be supplied to the outside. Also, since each of the positive electrode tab 111 and the negative electrode tab 112 is formed to protrude in various directions, each of the positive electrode lead 121 and the negative electrode lead 122 may extend in various directions.

The positive electrode lead 121 and the negative electrode lead 122 may be made of materials different from each other. That is, the cathode lead 121 may be made of the same material as the cathode collector, i.e., an aluminum (Al) material, and the anode lead 122 may be made of the same material as the anode collector, i.e., a copper (Cu) material or a copper material coated with nickel (Ni). Also, a portion of the electrode lead 12, which protrudes to the outside of the battery case 13, may be provided as a terminal part and electrically connected to an external terminal.

The battery case 13 is a pouch made of a flexible material, which accommodates the electrode assembly 10 therein. Hereinafter, the case in which the battery case 13 is the pouch will be described. When a pouch film 135 having flexibility is drawn by using a punch or the like, a portion of the pouch film 135 is stretched to form a cup part 133 including a pocket-shaped accommodation space 1331, thereby manufacturing the battery case 13. The battery case 13 accommodates the electrode assembly 10 so that a portion of the electrode lead 12, i.e., the terminal part is exposed and then is sealed. As illustrated in FIG. 1, the battery case 13 includes the upper case 131 and the lower case 132. An accommodation space 1331 in which a cup part 133 is formed to accommodate the electrode assembly 10 may be provided in the lower case 132, and upper case 131 may cover an upper side of the accommodation space 1331 so that the electrode assembly 10 is not separated to the outside of the battery case 13. Also, the sealing part 134 is sealed to seal the accommodation space 1331. Here, the cup part 133 having the accommodation part 1331 may be formed in the upper case 131 to accommodate the electrode assembly 10 in the upper portion. As illustrated in FIG. 1, one side of the upper case 131 and one side of the lower case 132 may be connected to each other. However, the present invention is not limited thereto. For example, the upper case 131 and the lower case 132 may be separately manufactured to be separated from each other.

When an electrode lead 12 is connected to the electrode tab 11 of the electrode assembly 10, and the insulation part 14 is provided on a portion of the electrode lead 12, the electrode assembly 10 may be accommodated in the accommodation space 1331 provided in the cup part 133 of the lower case 132, and the upper case 131 may cover the accommodation space from the upper side. Also, the electrolyte is injected, and the sealing part 134 extending outward from edges of the upper case 131 and the lower case 132 is sealed. The electrolyte may move lithium ions generated by electrochemical reaction of the electrode during charging and discharging of the secondary battery 1. The electrolyte may include a non-aqueous organic electrolyte that is a mixture of a lithium salt and a high-purity organic solvent or a polymer using a polymer electrolyte. As illustrated in FIG. 2, the pouch type secondary battery 1 may be manufactured through the above-described method.

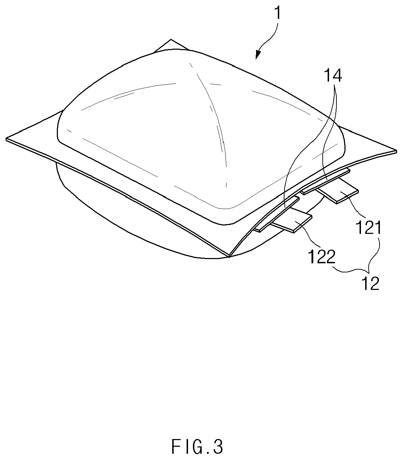

FIG. 3 is a perspective view illustrating a state in which the pouch type secondary battery 1 is expanded in volume according to an embodiment of the present invention.

In general, the pouch type secondary battery 1 may abnormally generate a large amount of gases due to heat generation due to an internal short circuit, overcharge, overdischarge, etc., by an external impact of the electrode assembly 10, and also due to electrolyte decomposition and a thermal runaway phenomenon by the heat generation. In addition, when the secondary battery is stored at a high temperature, an electrochemical reaction between an electrolyte and an electrode active material is quickly promoted by the high temperature to generate a gas.

In order to manufacture the pouch type battery case 13, the pouch film 135 having the flexibility is drawn using a punch or the like. The drawing is performed by inserting the pouch film 135 into a press and applying a pressure to the pouch film 135 through the punch to stretch the pouch film 135. As described above, the pouch film 135 is stretched to form the recessed cup part 133, thereby manufacturing the battery case 13. The pouch film 135 is formed by stacking a surface protection layer made of a nylon resin or polyethylene terephthalate (PET), a gas barrier layer mainly made of a thin aluminum film (Al foil), and a sealant layer mainly made of a polymer such as polypropylene (PP) or polyethylene (PE).

However, if the gas is generated in the battery case 13, since all the layers have the flexibility in the battery case 13, the internal pressure of the secondary battery 1 increases by the generated gas to expand a volume of the secondary battery 1 as illustrated in FIG. 3. In addition, there are problems such as weakening of bonding force between components, damage of the case of the secondary battery 1, an early operation of a protection circuit, deformation of an electrode, internal short circuit, explosion, and the like.

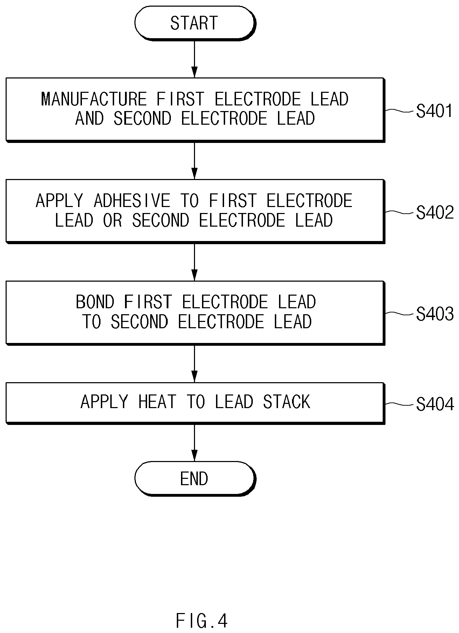

FIG. 4 is a flowchart illustrating a method for manufacturing an electrode lead 12 according to an embodiment of the present invention.

According to an embodiment of the present invention, since two-stage electrode leads 12 are formed, even if a gas is generated in a battery case to increase in internal pressure, the gas may be discharged to the outside to secure safety. In addition, since the two-stage electrode leads 12 are reliably detached, electrical connection may be completely cut off. In addition, while improving electrolyte resistance of an adhesive bonding the two-stage electrode leads 12 to each other, contact resistance may not significantly increase.

For this, a method for manufacturing an electrode lead 12 according to an embodiment of the present invention includes: a step of manufacturing each of a first electrode lead 123 and a second electrode 12; a step of applying an adhesive to at least one of the other end of the first electrode lead 123 or one end of the second electrode lead 124; a step of bonding the other end of the first electrode lead 123 to the one end of the second electrode lead 124 to form a lead stack; and a step of applying heat to the lead stack to cure the adhesive, thereby forming a connection part 15. Here, the adhesive is formed by mixing a conductor and a solvent, the solvent is formed by mixing a polymer and a diluent, and the solvent contains 5 wt% to 15 wt% of the diluent.

The electrode lead 12 manufactured in this manner includes: a first electrode lead 123 having one end connected to an electrode tab 11 protruding from one side of an electrode assembly 10; a second electrode lead 124 having one end connected to the other end of the first electrode lead 123 and the other end protruding to the outside of a battery case 13 accommodating the electrode assembly 10; and a connection part 15 configured to connect the first electrode lead 123 to the second electrode lead 124. Here, the connection part 15 is formed by curing an adhesive applied between the first electrode lead 123 and the second electrode lead 124, the adhesive is formed by mixing a conductor and a solvent, the solvent is formed by mixing a polymer and a diluent, and the solvent contains 5 wt% to 15 wt% of the diluent.

A pouch type secondary battery 1 including such an electrode lead 12 according to an embodiment of the present invention includes: an electrode assembly 10 in which electrodes including a positive electrode and a negative electrode and separators are stacked; a pouch-shaped battery case 13 configured to accommodate the electrode assembly 10; an electrode tab 11 connected to the electrodes and protruding from one side of the electrode assembly 10; a first electrode lead 123 having one end connected to the electrode tab 11; a second electrode lead 124 having one end connected to the other end of the first electrode lead 123 and the other end protruding to the outside of the battery case 13; and a connection part 15 configured to connect the first electrode lead 123 to the second electrode lead 124. Here, the connection part 15 is formed by curing an adhesive applied between the first electrode lead and the second electrode lead, the adhesive is formed by mixing a conductor and a solvent, the solvent is formed by mixing a polymer and a diluent, and the solvent contains 5 wt% to 15 wt% of the diluent.

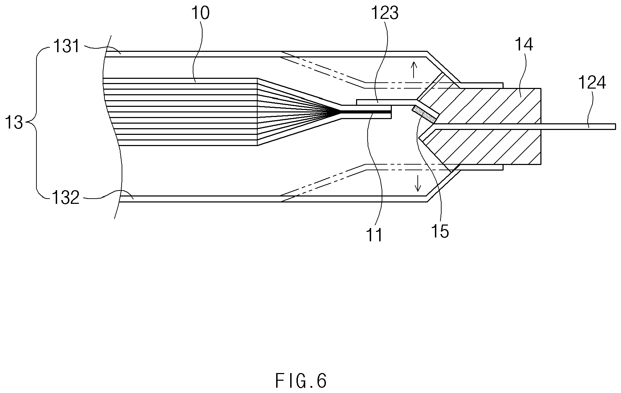

Hereinafter, each of the steps illustrated in the flowchart of FIG. 4 will be described with reference to FIGS. 5 and 6.

FIG. 5 is a partial cross-sectional view taken along line A-A' of FIG. 2 in the pouch type secondary battery according to an embodiment of the present invention.

According to an embodiment of the present invention, an electrode lead 12 is formed in two stages. That is, the electrode lead 12 includes a first electrode lead 123 having one end connected to an electrode tab 11 of an electrode assembly 10 and a second electrode 124 having one end connected to the other end of the first electrode lead 123 and the other end protruding to the outside of a battery case 13. Also, one surface of the other end of the first electrode lead 123 and one surface of one end of the second electrode lead 124 may adhere to each other through a connection part 15 and thus be connected to each other.

In order to manufacture the electrode lead 12, first, the first electrode lead 123 and the second electrode lead 124 are separately manufactured (S401). It is preferable that each of both the first electrode lead 123 and the second electrode lead 124 have a rectangular shape. Also, in order to be easily bonded to each other later, it is preferable that the first electrode lead 123 and the second electrode lead 124 have the same width.

An adhesive is applied to at least one of the other end of the manufactured first electrode lead 123 and one end of the manufactured second electrode lead 124 (S402). Then, the other end of the first electrode lead 123 and the one end of the second electrode lead 124 are bonded to each other to form a lead stack (S403).

The adhesive includes a material having conductivity. As a result, electricity generated from the electrode assembly 10 may be easily discharged to the outside. For this, it is preferable that the adhesive is formed by mixing a conductor and a solvent, and the solvent is formed by mixing a polymer and a diluent.

The conductor may include at least one of: natural or artificial graphite; carbon black such as carbon black, acetylene black, Ketjen black, channel black, furnace black, lamp black, and summer black; conductive fiber such as carbon fiber or metal fiber; metal powders such as carbon fluoride, aluminum, nickel, gold, silver, and copper powder; powder having a core/shell structure coated with a different kind of metal on one kind of metal; conductive whiskey such as zinc oxide and potassium titanate; conductive metal oxide such as titanium oxide; or conductive materials such as polyphenylene derivatives, in particular, may most preferably include silver. It is preferable that the conductor contained in the adhesive is contained at 70 wt% to 85 wt%.

The polymer may include at least one of an acrylic resin, an epoxy resin, an ethylene propylene diene monomer (EPDM) resin, a chlorinated polyethylene (CPE) resin, silicone, polyurethane, a urea resin, a melamine resin, a phenol resin, an unsaturated ester resin, polypropylene (PP), polyethylene (PE), polyimide, or polyamide, in particular, may most preferably include an epoxy or acrylic resin. It is preferable that the polymer contained in the adhesive is contained at 15 wt% to 30 wt%.

In order to increase in user convenience by reducing viscosity of the adhesive and improving fluidity, a diluent is added to the polymer. Here, the diluent may be a glycidylester-based material, for example, may include at least one of n-butyl glycidyl ether, allyl glycidyl ether, 2-ethylhexyl glycidyl ether, styrene oxide, phenylglycidyl ether, cresyl glycidyl ether, glycidyl methacrylate, tertiary carboxylic acid glycidyl ester, monoepoxides such as vinyl cyclohexene monoepoxide, butanediol glycidyl ether, 1,6-hexanediol diglycidyl ether, neopentyl glycol diglycidyl ether, (poly) ethylene glycol diglycidyl ether, (poly) propylene glycol diglycidyl ether, or diepoxides such as vinyl cyclohexene dioxide.

Also, the diluent is added to a rate of 5 wt% to 15 wt%, preferably 5 wt% to 10 wt%. If the addition ratio of the diluent is less than 5 wt%, viscosity is excessively high, and thus, it almost impossible to apply the adhesive, or even if it is possible, there is a problem in that it takes too much time and effort to apply the adhesive. Conversely, if the addition ratio of the diluent is greater than 15 wt%, electrolyte resistance of the connection part 15 formed by curing the adhesive decreases. As a result, there is a problem that the two-stage electrode leads 12 are detached by an electrolyte after the secondary battery 1 is manufactured.

After forming the lead stack, heat is applied to the lead stack using an oven or the like (S404). Then, the adhesive is dried and cured to form the connection part 15, and the connection part 15 also includes a conductor and a conductive polymer. Thus, as illustrated in FIG. 5, two-stage electrode leads 12 in which the first electrode lead 123 and the second electrode lead 124 are connected to each other may be completely manufactured.

When the battery case 13 is normal, the first and second electrode leads 123 and 124 have to be stably connected to each other. When the secondary battery 13 is expanded, the first and second electrode leads 123 and 124 have to be easily detached from each other. Thus it is preferable that the first and second electrode leads 123 and 124 are disposed on different planes so that upper and lower surfaces thereof are connected to each other instead that the first and second electrode leads 123 and 124 are disposed on the same plane so that side surfaces thereof are connected to each other.

It is preferable that the connection part 15 connecting the first electrode lead 123 to the second electrode lead 124 has a very thin thickness of 1 µm to 500 µm. Therefore, even if the first electrode lead 123 and the second electrode lead 124 form a stepped portion therebetween, a size of the stepped portion may not be excessively large.

As described above, a portion of the electrode lead 12, in particular, the portion at which the first electrode lead 123 and the second electrode lead 124 are connected to each other through the connection part 15, is surrounded by the insulation part 14. Also, the first and second electrode leads 123 and 124 are bonded to the battery case 13 through the insulation part 14. In a process of sealing the upper case 131 and the lower case 132, a relatively high pressure may be applied to a portion contacting the electrode lead 12 to damage the sealant layer of the battery case 13. Since the sealant layer directly contacts the electrode assembly 10 as described above, the sealant layer may have insulation properties. However, if the sealant layer is damaged, electricity may flow to the battery case 13 through the electrode lead 12. Particularly, since the gas barrier layer of the battery case 13 is made of a metal such as aluminum, if the sealant layer is partially damaged to expose the gas barrier layer, the electricity may easily flow due to the contact with the electrode lead 12.

Thus, the insulation part 14 may be made of a nonconductor having non-conductivity, which is not electrically conductive. Also, the insulation part 14 has high mechanical strength and heat resistance. Thus, the insulation part 14 may include, for example, a polyolefin-based resin such as polypropylene (PP) or polyethylene (PE). Particularly, polypropylene (PP) is excellent in mechanical properties such as tensile strength, rigidity, surface hardness, abrasion resistance, heat resistance, and the like, and chemical properties such as corrosion resistance and the like and thus is mainly used for manufacturing the insulation part 14. Furthermore, acid-treated polypropylene may be provided to improve bonding force of the insulation part 14. For example, the acid-treated polypropylene and normal polypropylene may be mixed with each other, polypropylene may be further mixed, or only the acid-treated polypropylene may be provided simply. Here, the acid-treated polypropylene may be maleic anhydride polypropylene (MAH PP).

Thus, when the upper case 131 and the lower case 132 are thermally fused, the insulation part 14 may be maintained in shape to prevent the electrode lead 12 and the gas barrier layer from contacting each other even through a portion of the sealant layer is damaged. Thus, the electricity generated from the electrode assembly 10 may be prevented from flowing to the battery case 13 through the electrode lead 12.

As illustrated in FIG. 5, the insulation part 14 may surround all of the first electrode lead 123, the connection part 15, and the second electrode lead 124. If the first electrode lead 123 or the connection part 15 is not surrounded by the insulation part 14, repulsive force may not be applied to the first electrode lead 123 and the second electrode 124 even though the battery case 13 is expanded.

FIG. 6 is a partial cross-sectional view taken along line A-A' of FIG. 2 in a state in which the pouch type secondary battery is expanded in volume according to an embodiment of the present invention.

As described above, when the internal pressure of the pouch type secondary battery 13 increases, the pouch type secondary battery 1 is expanded in volume. Thus, as illustrated in FIG. 6, an outer wall of the battery case 13 moves outward. Here, upper and lower walls of the outer wall of the battery case 13 may have a large area and be not sealed, resulting in higher flexibility. Thus, the upper wall of the battery case 13 may move upward, and the lower wall of the battery case 13 may move downward. The outer wall of the battery case 13 may move outward to apply the repulsive force to the first electrode lead 123 and the second electrode 124 connected through the insulation part 14. Thus, as the internal pressure of the battery case 13 gradually increases, moving force of the outer wall of the battery case 13 may more increase, and the repulsive force applied to the first electrode lead 123 and the second electrode lead 124 more increase.

When the bonding force between the first electrode lead 123 and the second electrode lead 124 is greater than the repulsive force, as illustrated in FIG. 6, the first electrode lead 123 and the second electrode lead 124 may be detached from each other. Thus, the electrical connection may be physically interrupted so that the electricity does not flow ever. Here, the detachment may mean that adsorbed or attached portions are separated from each other. However, the bonding force between the first and second electrode leads 123 or 124 and the connection part 15 may be less than that between the first and second electrode leads 123 and 124 and the insulation part 14. Thus, when the repulsive force is applied to the first electrode lead 123 and the second electrode lead 124, the bonding force between the first and second electrode leads 123 and 124 and the insulation part 14 may be maintained to maintain the sealing of the battery case 13, but the first and second electrode leads 123 and 124 may be detached from each other.

### Manufacturing Example 1

A nickel-plated copper plate having a thickness of 200 µm was cut to manufacture each of a first electrode lead having a length of 40 mm and a width of 45 mm and a second electrode lead having a length of 10 mm and a width of 45 mm.

30 g of first silver powder having a particle size of 5 µm or less and 30 g of second silver powder having a particle size of 2 µm or less were mixed at a 1:1 weight ratio. Also, 1 g of glycidyl ester as a diluent was added to 9 g of liquid epoxy to prepare a solvent. In addition, 7.8 g of the mixed silver powder was dissolved in 2.2 g of the solvent to prepare an adhesive containing 78 wt% silver and 22 wt% solvent. Here, the glycidyl ester that is the diluent is added to the epoxy in 10 wt% and thus occupies 2.2 wt% in the total adhesive.

The prepared adhesive was applied to an area from one end of the second electrode lead up to a distance of 5 mm, and the other end of the first electrode lead was bonded to form a lead stack. Also, the lead stack was put into an oven, and the adhesive was dried and cured at a temperature of 180°C for 1 hour to manufacture two-stage electrode leads.

### Manufacturing Example 2

Two-stage electrode leads were manufactured in the same method as in Manufacturing Example 1, except that 0.5 g of glycidyl ester that is the diluent is added to 9.5 g of liquid epoxy to prepare a solvent. Here, the glycidyl ester that is the diluent is added to the epoxy in 5 wt% and thus occupies 1.1 wt% in the total adhesive.

### Comparative Example 1

Two-stage electrode leads were manufactured in the same method as in Manufacturing Example 1, except that 3 g of glycidyl ester that is the diluent is added to 7 g of liquid epoxy to prepare a solvent. Here, the glycidyl ester that is the diluent is added to the epoxy in 30 wt% and thus occupies 6.6 wt% in the total adhesive.

### Comparative Example 2

Two-stage electrode leads were manufactured in the same method as in Manufacturing Example 1, except that 5 g of glycidyl ester that is the diluent is added to 5 g of liquid epoxy to prepare a solvent. Here, the glycidyl ester that is the diluent is added to the epoxy in 50 wt% and thus occupies 11 wt% in the total adhesive.

**[Table 1]**

| | Manufacturing Example 1 | Manufacturing Example 2 | Comparative Example 1 | Comparative Example 2 |
|---|---|---|---|---|
| Ratio of diluent in solvent [wt%] | 10 | 5 | 30 | 50 |
| Ratio of total diluent [wt%] | 2.2 | 1.1 | 6.6 | 11 |
| Silver ratio [wt%] | 78 | 78 | 78 | 78 |
| Solvent ratio [wt%] | 22 | 22 | 22 | 22 |

### Method for measuring physical property - 1. Tong-term reliability

First, each of two-stage electrode lead samples manufactured in Manufacturing Example 1, Manufacturing Example 2, Comparative Example 1, and Comparative Example 2 was accommodated together with 30 ml of an electrolyte (prepared by dissolving lithium salt (LiPF6) 1M, and ethylene carbonate (EC): ethylmethyl carbonate (EMC): dimethyl carbonate (DMC), which are contained at a ratio of 3:3:4) in a 125 ml polyethylene (PE) bottle, and then, an inlet was sealed with paraffin. Then, each of the bottles were sealed with an aluminum wrapper and stored for 16 weeks in a space having a temperature of 60°C and a relative humidity of 90% RH. After every 1, 2, 4, 8, and 16 weeks elapse, the two-stage electrode lead samples were put out to completely remove the electrolyte, and a terminal was connected to each of both ends to measure resistance by using a resistance meter (model name: HIOKI 3560).

### Result obtained by measuring physical property - 1. Tong-term reliability

**[Table 2]**

| | | Manufacturing Example 1 | Manufacturing Example 2 | Comparative Example 1 | Comparative Example 2 |
|---|---|---|---|---|---|
| Resistance [mΩ] | 0 week | 0.150 | 0.136 | 0.161 | 0.168 |
| | 1 weeks | 0.157 | 0.137 | 0.561 | 3.112 |
| | 2 weeks | 0.164 | 0.138 | Separation | Separation |
| | 4 weeks | 0.171 | 0.137 | Separation | Separation |
| | 8 weeks | 0.167 | 0.137 | Separation | Separation |
| | 16 weeks | 0.169 | 0.137 | Separation | Separation |

As described in [Table 2], when comparing Manufacturing Examples 1 and 2 to Comparative Examples 1 and 2 according to the present invention, the electrode leads according to Manufacturing Examples 1 and 2 were not separated into the first electrode lead and the second electrode lead even though a period of 16 weeks elapses. On the other hand, in the electrode leads according to Comparative Examples 1 and 2, the first electrode lead and the second electrode lead were separated from each other by the electrolyte when only two weeks elapse.

As described above, in the case of the electrode leads according to Manufacturing Examples 1 and 2, bonding force of the connection part was not significantly reduced by the electrolyte, but in the case of the electrode leads according to Comparative Examples 1 and 2, bonding force of the connection part was significantly reduced. That is, it is seen that the electrode leads according to Manufacturing Examples 1 and 2 have electrolyte resistance that is superior to that of the electrode leads according to Comparative Examples 1 and 2.

In the electrode lead according to Manufacturing Example 1, the resistance increased by 12.7% from 0.150 mΩ that is initial resistance to 0.169 mQ after 16 weeks. On the other hand, in the electrode lead according to Manufacturing Example 2, the resistance increased by only 0.74% from 0.136 mQ that is initial resistance to 0.137 mΩ after 16 weeks.

As described above, it is seen that the electrode lead according to Manufacturing Example 2 did not have a larger increase in resistance than the electrode lead according to Manufacturing Example 1.

### Method for measuring physical property - 2. Weight reduction rate

The two-stage electrode lead samples manufactured in Manufacturing Example 1 and Comparative Example 1 were put into a simultaneous thermogravimetric analyzer (Manufacturer: HITACHI, Model Name: STA7200). Then, heat was applied in an environment of a nitrogen (N2) gas at a temperature from 30°C to 400°C at a heating rate of 4°C/min. Then, a changed mass compared to an initial mass was calculated to a weight reduction rate.

### Result obtained by measuring physical property - 2. Weight reduction rate

**[Table 3]**

| | Manufacturing Example 1 | Comparative Example 1 |
|---|---|---|
| Weight reduction rate at 300°C [wt%] | -0.4 | -1.4 |

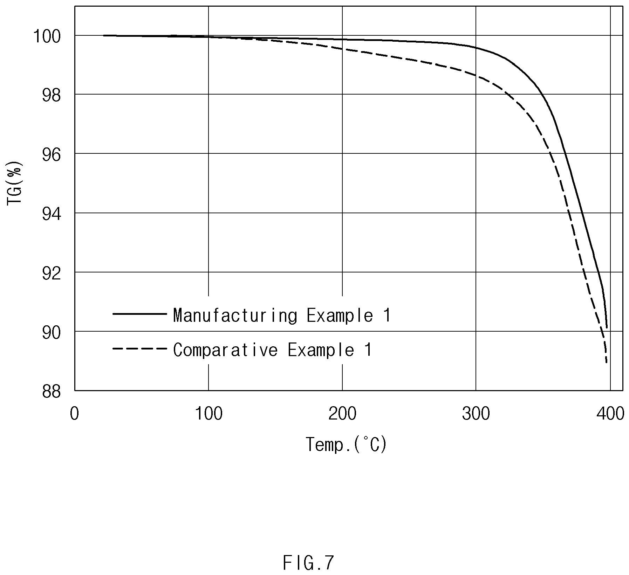

FIG. 7 is a graph illustrating a weight reduction rate of each of electrode lead samples according to Manufacturing Example 1 and Comparative Example 1 of the present invention.

As illustrated in FIG. 7, as the temperature increases, a weight of the electrode lead according to Comparative Example 1 decreased more rapidly compared to the electrode lead according to Manufacturing Example 1. Particularly, as described in [Table 3], the electrode lead according to Manufacturing Example 1, which is manufactured at a temperature of 300°C, had a weight reduction ratio of only -0.4 wt%, but the electrode lead according to Comparative Example 1 had a weight reduction ratio of -1.4 wt%. The high weight reduction rate means that a contained amount of diluent and a residual amount of moisture contained in the diluent itself are large. However, when the adhesive is dried and cured, the diluent and the moisture contained in the diluent itself are not sufficiently evaporated in the electrode lead according to Comparative Example 1 rather than in the electrode lead according to Manufacturing Example 1, and thus, an amount of diluent and a residual amount of moisture are larger. If the amount of diluent and the residual amount of moisture are large, reactivity with the electrolyte is high, and when the amount of diluent and the residual amount of moisture are small, reactivity with the electrolyte is low.

As described above, since the electrode lead according to Manufacturing Example 1 of the present invention has less weight at a high temperature than the electrode lead according to Comparative Example 1, it is seen that the amount of diluent and the residual amount of moisture is small, and thus, the electrolyte resistance is more excellent.

Those with ordinary skill in the technical field of the present invention pertains will be understood that the present invention can be carried out in other specific forms without changing the technical idea or essential features. Therefore, the above-disclosed embodiments are to be considered illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

### [Description of the Symbols]

| | | | |
|---|---|---|---|
| 1: | Secondary battery | 10: | Electrode assembly |
| 11: | Electrode tab | 12: | Electrode lead |
| 13: | Battery case | 14: | Insulation part |
| 15: | Connection part | 111: | Positive electrode tab |
| 112: | Negative electrode tab | 121: | Positive electrode lead |
| 122: | Negative electrode lead | 123: | First electrode lead |
| 124: | Second electrode lead | 131: | Upper case |
| 132: | Lower case | 133: | Cup part |
| 134: | Sealing part | 135: | Pouch film |
| 1331: | Accommodation space | | |

## Claims

1. An electrode lead comprising:
a first electrode lead having one end connected to an electrode tab protruding from one side of an electrode assembly;
a second electrode lead having one end connected to the other end of the first electrode lead and the other end protruding to the outside of a battery case accommodating the electrode assembly; and
a connection part configured to connect the first electrode lead to the second electrode lead,
wherein the connection part is formed by curing an adhesive applied between the first electrode lead and the second electrode lead,
the adhesive is formed by mixing a conductor and a solvent,
the solvent is formed by mixing a polymer and a diluent, and
the solvent contains 5 wt% to 15 wt% of the diluent.

2. The electrode lead of claim 1, wherein the solvent contains 5 wt% to 10 wt% of the diluent.

3. The electrode lead of claim 1, wherein the diluent comprises a glycidyl ester-based material.

4. The electrode lead of claim 1, wherein the adhesive contains 70 wt% to 85 wt% of the conductor and 15 wt% to 30 wt% of the solvent.

5. The electrode lead of claim 1, wherein the conductor comprises at least one of graphite, carbon black, conductive fiber, metal powder, conductive whisker, conductive metal oxide, or conductive material.

6. The electrode lead of claim 5, wherein the conductor comprises silver.

7. The electrode lead of claim 1, wherein the polymer comprises at least one of an acrylic resin, an epoxy resin, an ethylene propylene diene monomer (EPDM) resin, a chlorinated polyethylene (CPE) resin, silicone, polyurethane, a urea resin, a melamine resin, a phenol resin, an unsaturated ester resin, polypropylene (PP), polyethylene (PE), polyimide, or polyamide.

8. The electrode lead of claim 7, wherein the polymer comprises an epoxy resin.

9. A pouch type secondary battery comprising:
an electrode assembly in which electrodes comprising a positive electrode and a negative electrode and separators are stacked;
a pouch-shaped battery case configured to accommodate the electrode assembly;
an electrode tab connected to the electrodes and protruding from one side of the electrode assembly;
a first electrode lead having one end connected to the electrode tab;
a second electrode lead having one end connected to the other end of the first electrode lead and the other end protruding to the outside of the battery case; and
a connection part configured to connect the first electrode lead to the second electrode lead,
wherein the connection part is formed by curing an adhesive applied between the first electrode lead and the second electrode lead,
the adhesive is formed by mixing a conductive material and a solvent,
the solvent is formed by mixing a polymer and a diluent, and
the solvent contains 5 wt% to 15 wt% of the diluent.

10. The pouch type secondary battery of claim 9, further comprising an insulation part configured to surround a portion at which the first and second electrode leads are connected to each other through the connection part and configured to bond the first and second electrode leads to the battery case.

11. The pouch type secondary battery of claim 10, wherein bonding force between each of the first and second electrode leads and the connection part is less than that between each of the first and second electrode leads and the insulation part.

12. The pouch type secondary battery of claim 10, wherein the insulation part is made of at least one of a thermoplastic resin, a thermosetting resin, or a photocurable resin, which has electrical insulation.

13. A method for manufacturing an electrode lead, the method comprising:
a step of manufacturing each of a first electrode lead and a second electrode lead;
a step of applying an adhesive to at least one of the other end of the first electrode lead or one end of the second electrode lead;
a step of bonding the other end of the first electrode lead to the one end of the second electrode lead to form a lead stack; and
a step of applying heat to the lead stack to cure the adhesive, thereby forming a connection part 15,
wherein the adhesive is formed by mixing a conductive material and a solvent,
the solvent is formed by mixing a polymer and a diluent, and
the solvent contains 5 wt% to 15 wt% of the diluent.
